# EUROPEAN PATENT APPLICATION

(11) **EP 3 207 965 A1**
(43) Date of publication of application: **23.08.2017**
(21) Application number: 14904150.1
(22) Date of filing: 21.11.2014
(51) Int. Cl.: A63C 17/12, B62D 51/02

(54) **MODE OF TRANSPORTATION**

(30) Priority: 15.10.2014 RU 2014141340
(71) Applicant: Orlovskiy, Nikolay Vladimirovich, Moscow 115409 (RU)
(72) Inventor: Orlovskiy, Nikolay Vladimirovich, Moscow 115409 (RU)
(74) Representative: Glawe, Delfs, Moll
(86) International application number: PCT/RU2014/000880
(87) International publication number: WO 2016/060585

(57) **Abstract**

The group of inventions relates to vehicles. The vehicle comprises the framework in form of beam, wheel, drive and braking system, while the vehicle is partially loaded with the weight of user and the user stands on roller skates and holds the vehicle on the beam so that the wheel is behind the user and contacts with its tyre the road surface; and when the user activates the drive, the wheel starts rotating and, as a result of friction between the wheel's tyre and the road surface, there arises a force making the vehicle with user move. Additionally, another technique for operation of the same vehicle is being offered, at which the vehicle on the move is positioned in the front of user.

## Description

Group of inventions relates to vehicles and can be utilized for the purposes of transport, stroller, sports and carriage of small cargoes.

There is an electric scooter having one or two rear wheels and one front wheel, at that the front wheel is secured on a moveable fork which provides an option for this vehicle to turn left and right. The electric scooter represents a one- or two-person vehicle in which, in the leading wheel (or wheels) mechanism, a battery powered electric motor is used. (Internet http://ru.wikipedia.org/wiki/ 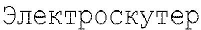 ). Drawbacks of the said scooter are the need for driver to maintain equilibrium on account of turning the rudder and the impracticability of its use on the pedestrian and bicycle lanes, and also the high cost. The mentioned drawbacks are caused by the vehicle's design.

Well known is the vehicle Segway PT comprising two wheels on common axle (Internet http://en.wikipedia.org/wiki/Segway PT 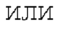 http://www.segway.com; The magazine "Cars", 2004, Nº4, pp. 80-82.). Between the wheels, there is a pad accommodating user holding on the control handlebar. Control over the vehicle is implemented by inclination of user's body. Upon inclining the user's body ahead, Segway PT starts moving ahead, and the more is the inclination the more is the vehicle's speed; at user's inclination backwards the speed drops or the vehicles starts reverse movement. Vehicle's turn is implemented by turn of the control handle (on obsolete models) or rocking the steering post to the left or to the right (in new versions models). Each wheel has individual drive comprising electric motor and reducer. Segway PT has an automated stabilization system comprising gyroscopic and liquid sensors, microprocessors, controllers and electric motors. Signals from the sensors arrive at microprocessors which generate control signals for controllers. As a result, controllers change the speed and direction of rotation of electric motors so as to return Segway PT in a equilibrium condition. Segway PT utilizes the self-balancing technique designed by Deen Keimen with fellow inventors (Indication system for vehicle - Patent US5794730, Classes B60K7/00, A61G5/12, A61G5/06, B62D57/00, A61G5/10, A61G5/14, A61G5/04, 18.08.1998; Personal mobility vehicles and methods - Patent US6302230, Classes B62D61/12, B62D51/00, A63C17/08, B62D37/00, B62K1/00, B62D61/00, A61G5/06, A61G5/04, B62D51/02, A63C17/01, B60L15/20, 16.10.2001). Drawbacks of this vehicle are: absence of passive stability, i.e. stability can be achieved only by means of operation of complicated electronics failure of which leads to the user's falling down; inability to negotiate curbs; while movement in pedestrians traffic, the vehicle can traumatize people; cannot move on the road with automobiles over the danger to user; high cost.

The most similar as to the task being solved is the vehicle designed by inventor Shane Chen from the USA (Powered single-wheeled self-balancing vehicle for standing user - Patent US20110220427, Classes B62K1/00, B62D61/00, 15.09.2011). Based on this Patent, they produce a vehicle known as Solowheel. The vehicle Solowheel comprises one wheel and the system of automated stabilization of the user vertical position in the plane of rotation of the wheel. Wheel of Solowheel has a drive in form of integrated electric motor enclosed in casing. Two collapsible pads for feet are secured on the casing sides. The casing accommodates gyroscopic sensor which controls change in angle of inclination of the casing relative to vertical line in the plane of the movement direction. Signal from the gyroscopic sensor arrives at electronic control system which changes the electric motor speed so as to return Solowheel in vertical position. To start movement, electric power for Solowheel shall be fed, one foot placed on the pad, then user shall push himself off the road with another foot, then place another foot on free pad. When user inclines himself ahead, the speed of movement rises, when he inclines himself backwards - the speed drops or the vehicle stops. Movement direction can be changed by turning the vehicle with feet to the left or to the right or by increasing the feet pressure on one of the pads. Drawback of this vehicle is that its stabilisation by roll is implemented by user himself by means of balancing, i.e. by changing the centre of gravity position and changing the angle of inclination of the vehicle relative to vertical line. Such technique of keeping the equilibrium takes skills and preliminary training of user. Additionally, in this vehicle, failure of the system for automated stabilisation of user's vertical position will likely lead to falling down of user which is a drawback of Solowheel. Another drawback of Solowheel is the higher risk, as falling down from the vehicle from standing position can lead to trauma. It is worth noting that user of Solowheel, on the movement, holds the vehicle between his legs and cannot crouch so as to provide additional stability by lowering the centre of gravity when negotiating the irregularities of road pavement.

The purpose of the invention being offered is creation of cheap, simple in handling and safe vehicle with high range capacity suitable for use under city conditions including on the walkways and bicycle lanes. The assigned task as to safety is being solved on account of stable position of user prior to start of travelling, during travelling, while braking and stoppage. Position stability is being reached on account of the fact that user along with the vehicle uses for support the road pavement at three places (hereinafter "support areas"); at that the support areas stand off each other, and the common centre of gravity of user and the vehicle, in the horizontal plane, gets inside the triangle based on the support areas.

### Concise description of the matter of invention.

The declared vehicle, which comprises a frame, a wheel with the option of rotation relative to the frame, a drive and a braking system, features such a design where the framework in fabricated in form of at least one beam with the wheel at one its end and the place for embracing by user with his one hand at its another end; whereas the middle part of the beam is intended for support of the user's another hand.

The vehicle can be manufactured with a grip on the second end of the beam positioned in parallel with the wheel's pivot.

The vehicle can be manufactured with additional grip at the second end of the beam positioned opposite the first grip and parallel to the wheel's pivot.

The vehicle can be manufactured with a secured, at the second end of the beam, overhang with a rudder secured therein. Terms 'overhang' and 'rudder' hereinafter mean the parts used in design of a bicycle rudder. Rudder, overhang, beam and fork are rigidly interlinked.

The vehicle can be manufactured with a secured, at the second end of the beam, overhang with an asymmetrical rudder secured therein; the right-hand grip of the rudder is positioned in parallel with the wheel's pivot and the left-hand grip has a bend allowing the end of the left-hand grip to be positioned perpendicular to the wheel's pivot, while the end of the left-hand grip in working condition is positioned vertically. Rudder, overhang, beam and fork are rigidly interlinked.

The vehicle differs in that, in the middle part of the beam, the support handle is secured so that centre line of the support handle is parallel to the wheel rotation plane, at that the support handle diverges from the beam at an angle in such a way that in working position the support handle is oriented horizontally.

The vehicle differs in that the beam has several bends in the plane parallel to the wheel rotation plane, at that, in the middle part of the beam, there is a linear span at which the support handle is secured, and the bends of the beam are made so that in working position the support handle is oriented horizontally.

The vehicle differs in that the drive comprises an electric motor integrated in the wheel.

The vehicle differs in that the drive is supplemented with the reducer which is integrated in the wheel.

The vehicle differs in that the reducer exploits a planetary gear transmission.

The vehicle differs in that transmission of torque to the wheel's rim is implemented through the overrunning clutch (in the literature also called 'free-wheel mechanism' and 'free-running coupling').

The vehicle differs in that the electric power supply system comprises a speed grip, and user, by turning this grip, controls the vehicles's travel speed.

The vehicle differs in that at least one additional side wheel is installed in parallel with the wheel.

The vehicle differs in that the electric motor power supply system comprises at least one battery.

The vehicle differs in that the electric motor power supply system comprises at least one detachable battery.

The vehicle differs in that the electric motor power supply system comprises at least one supercapacitor.

The vehicle differs in that the electric motor power supply system comprises fuel cells.

The vehicle differs in that electric motor power supply system comprises a controller for controlling the electric power being fed to the electric motor.

The vehicle differs in that electric motor power supply system comprises a solar cell and a power source charge controller.

The vehicle differs in that it is additionally fitted with a recuperative braking system.

The vehicle differs in that the drive consists of a internal-combustion engine and a reducer both secured on the framework.

The vehicle differs in that the beam manufactured with a fork at the end, the wheel is secured in the fork and another end of the beam is bent and parallel to the wheel's pivot and serves as a grip.

The vehicle differs in that the beam is fabricated with bends allowing to position the fork with the wheel behind user.

The vehicle differs in that handle are collapsible.

The vehicle differs in that the beam is collapsible.

The vehicle differs in that the beam is fabricated from a pipe rod the inner volume of which is intended for laying the electric cables.

The vehicle differs in that its braking system comprises a brake lever pressing of which by user initiates braking.

The vehicle differs in that its braking system comprises two brake levers pressing of each of which separately by user initiates braking.

The vehicle differs in that its brake system exploits rim brakes.

The vehicle differs in that its brake system exploits disc brakes.

The vehicle differs in that it has mechanical or electric bicycle bell.

The vehicle differs in that it has a stop signal being activated by pressing the brake lever.

The vehicle differs in that it has a turn light being activated and deactivated by means of a switch.

The vehicle differs in that it has a headlight being activated and deactivated by means of a switch.

The vehicle differs in that it has parking lights being activated and deactivated by means of a switch.

The vehicle differs in that it has a fender located above the wheel and protecting from dirt and splashes both user and assemblies of the vehicle.

The vehicle differs in that a detachable container for transport of cargoes is secured on the framework.

The vehicle differs in that the controller hardware and software support provides the mode of 'Reverse' movement, and this mode of movement is being activated with a switch.

The vehicle differs in that the controller hardware and software support provides the mode of 'Cruise Control' movement, and this mode of movement is being activated by pressing the proper button.

The vehicle differs in that the controller hardware and software support provides the clock function, and the controller can display time value on the monitor in digital or graphical format.

The vehicle differs in that the controller hardware and software support provides the function of determining the runtime of the controller, and the controller can display this value on the monitor in digital or graphical format.

The vehicle differs in that the controller hardware and software support provides option for calculation of the vehicle's movement speed and display of this indicator on the monitor in numeric format.

The vehicle differs in that the controller hardware and software support provides option for calculation of the vehicle's travelled distance and display of this indicator on the monitor in numeric format.

The vehicle differs in that the controller hardware and software support provides option for determining the battery or supercapacitor depth of charge and display of this parameter on the monitor in numeric or graphical format.

The vehicle differs in that the controller hardware and software support provides option for limiting the vehicle's movement maximal speed and presetting this value in settings.

The vehicle differs in that the controller hardware and software support provides option for presetting the vehicle's wheel size and storing this value in settings.

The vehicle differs in that it has a bumper intended for protection of the vehicle from mechanical damages.

### Description of options for invention implementation.

Depending on requirements imposed on the vehicle, the invention can be implemented in many different options.

### OPTION 1.

Structure of one of the options for design of the vehicle is clarified in the drawings and pictures (FIGS. 1 - 5):
FIG.1 shows general view of the vehicle;
FIG. 2 shows the upper part of the vehicle - view from front;
FIG. 3 shows the lower part of the vehicle - view from side;
FIG. 4 shows a user on roller skates moving with use of the vehicle in the sport position;
FIG. 5 shows a user on roller skates moving with use of the vehicle in the sport position and towing a passenger.

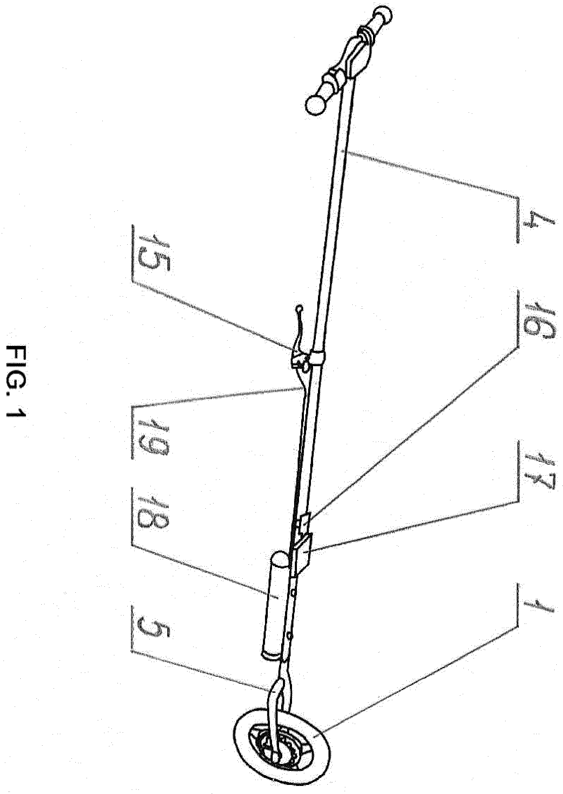

The vehicle consists of the framework, electric drive in form of motor located in the wheel, motor electric power supply system and braking system. In this design option, the vehicle is driven by electric motor and planetary reducer, both integrated in the wheel 1 (FIG.1). The planetary reducer design provides an overrunning clutch.

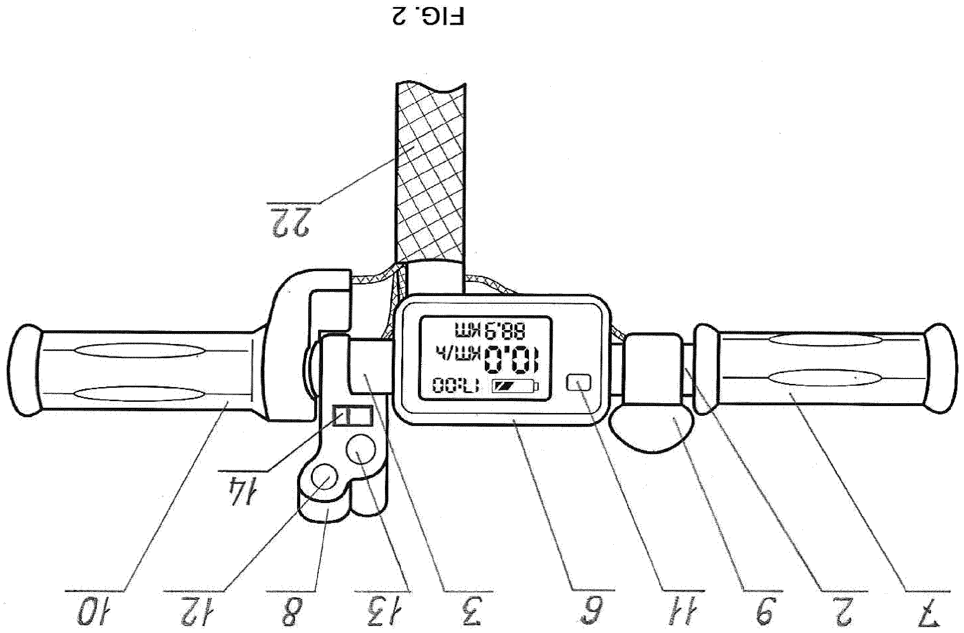

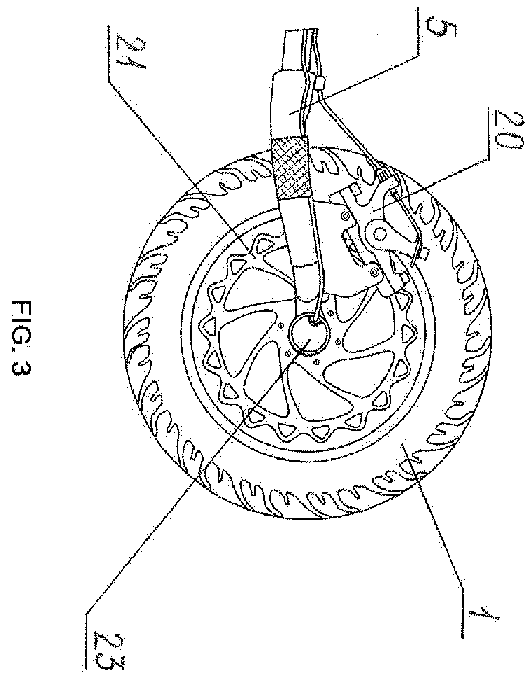

The framework consists of the following parts: left-hand grip 2 (FIG. 2), right-hand grip 3, beam 4 (FIG. 1), fork 5, all rigidly interlinked. Left-hand and right-hand grips carry the following parts secured on them: monitor 6 (FIG. 2), passenger's grip 7, switches unit 8, electronic alarm 9 and speed regulator handlebar 10. The monitor 6 has a button for energizing the vehicle 11 (FIG. 2). Switches unit 8 has: button for actuation of the movement mode 'Cruise control' 12 (FIG. 2), button for actuating the electronic alarm 13 and switch for changeover to 'Reverse' mode 14. Wheel's axle 1 is rigidly secured in fork 5 (FIG. 3) with use of nuts and washers (not shown) . Wheel 1 is manufactured in form of motor-wheel and is secured in such a manner that the axle of the motor-wheel along with the electric motor stator are rigidly linked to fork 5, at that the torque is being transmitted from the electric motor rotor through the planetary reducer and overrunning clutch further to the wheel's rim.

Beam carries secured the braking lever 15 (FIG. 1) and box 16 accommodating the electrical plug connectors (not shown) connecting the controller 17 to the vehicle's other electrical equipment. Beam, underneath the controller, carries secured the battery 18 (FIG. 1). Braking wire cable 19 in braid is laid along the beam from the braking lever 15 (FIG. 1) and routed to the braking machine 20 (FIG. 3). Braking machine 20 (FIG. 3) comprises the brake pads (not shown), which upon pressing the brake lever dogs the brake disc 21 (FIG. 3). Brake disc 21 secured on the wheel's hub 1. All the electric wires are secured on the beam 4 (FIG. 1) and fork 5 with use of braid 22 (FIG. 2). Protruding parts of the motor-wheel are covered with rubber hoods 23 (FIG. 3).

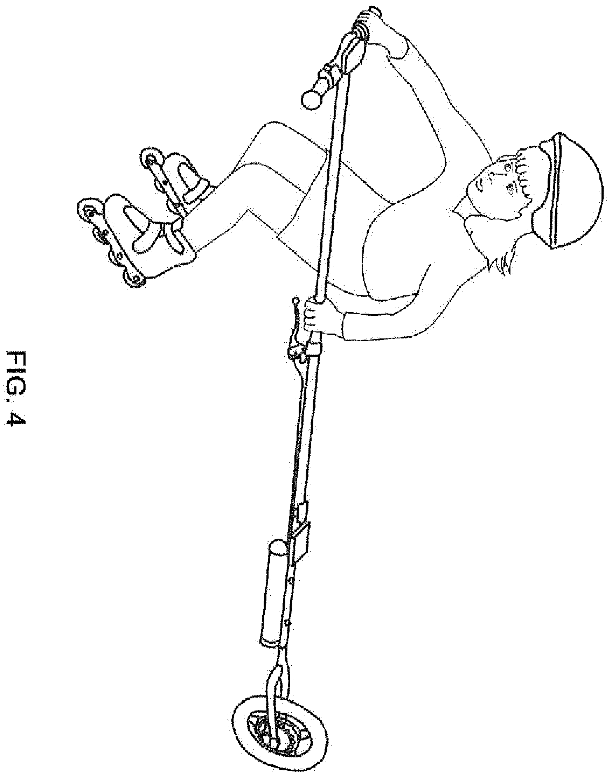

Two options of operation of the vehicle are envisaged depending on user's position relative to the vehicle: sport position and stroller position. In sport position the vehicle operates as follows. User, with roller skates on, takes the vehicle in his arms, stands on a road with even and solid pavement and holds the vehicle in such a way that the beam is aside the user and the motor-wheel is behind him with the wheel's tyre standing on the road pavement. On the monitor 6, user presses the button 11 for energizing the vehicle which feeds power supply to controller 17, the controller goes on and starts controlling all the vehicles's electric equipment. The monitor displays the values of parameters in digital format: 'time', 'speed', 'Mileage' and also, in graphics, 'Charge' . User holds the speed handlebar with his right hand and with his left hand he supports on the beam as it is shown in FIG. 4. User starts turning the speed handlebar 10, wheel 1 starts rotating, and the vehicle starts moving together with the user who is rolling on roller skates. User controls the vehicle speed by turning the speed handlebar 10, at that the electrical control signal is being transmitted to the controller 17, and the controller increases or decreases the power fed to the electric motor integrated in the motor-wheel. User effects turning of the vehicle by turning his feet in roller skates and also by inclining the wheel's axle. Stoppage of the vehicle shall be done as follows. User presses the brake handlebar 15; as per electric signal from the relay integrated in the brake handlebar 15, the controller 17 deenergizes the wheel's electric motor. Additionally, upon pressing the brake handlebar 15, the brake wire cable 19 is being tightened and the brake pads of the brake machine 20 come in touch with the brake disc 21. As a result, the wheel 1 stops rotating and obstructs further movement of the vehicle.

In stroller position the vehicle operates as follows. User, with roller skates on, takes the vehicle in his hands and stands on the road with even solid pavement. On monitor 6, user presses the vehicle energizing button 11 the same way it is being done for sport position. Further, user puts switch 14 in 'Reverse' position. Then user places the vehicle with its wheel ahead and holds it in front of him holding the speed handlebar 10 with his left hand and the passenger's grip 7 with his right hand. User turns the speed handlebar with his left hand, and the wheel 1 starts rotating, and the vehicle starts moving together with the user who is rolling on roller skates. User controls the vehicle's speed by turning the speed handlebar 10. User effects turn of the vehicle by changing the angle of inclination of the wheel's axle and also completes the turn by turning his feet in roller skates. For stoppage of the vehicle, user decreases thrust of the motor down to zero by changeover of the speed handlebar to respective position and effects mechanical braking against the road pavement with a brake heel of roller skate.

Consider several cases of the vehicle exploitation for OPTION 1:
The vehicle has a 'Cruise control' mode. Upon activation of this mode, controller 17 tends to maintain the constant angle speed of the motor-wheel's 1 rotation regardless of current load on the vehicle. For activation of 'Cruise control' mode, user first sets proper speed of the vehicle's movement with use of speed handlebar 10, than presses button 'Cruise control' 12. Further, controller 17 tends to maintain the vehicle's speed of movement constant and if the speed rises, for instance on descent, the controller decreases the speed fed to the electric motor; and if the movement speed drops, for instance on ascent, then the controller increases the speed fed to the electric motor. In the movement mode 'Crise control' adjustment of the speed fed to the electric motor is being done automatically, unattended by user. For deactivation of the movement mode 'Cruise control', user again presses the button 'Cruise control' 12, respective control electric signal arrives at the controller 17, and the controller deactivates the mode.

Accidentally, road pavement has foreign articles and potholes. Normally, wheeled vehicles try to circumvent such road deficiencies to avoid impact of wheels on such obstruction. User of the offered vehicle can avail of option to dodge such obstructions different ways; he can not only change trajectory of movement of each foot and vehicle's wheel individually, but also, additionally, slightly raise, if there is a need, left or right leg thus preventing collision with obstruction. Additionally, if it is impracticable to avoid impact of the vehicle's wheel on obstruction, user can transfer the centre of gravity and decrease load on the vehicle and thus mitigate the impact force.

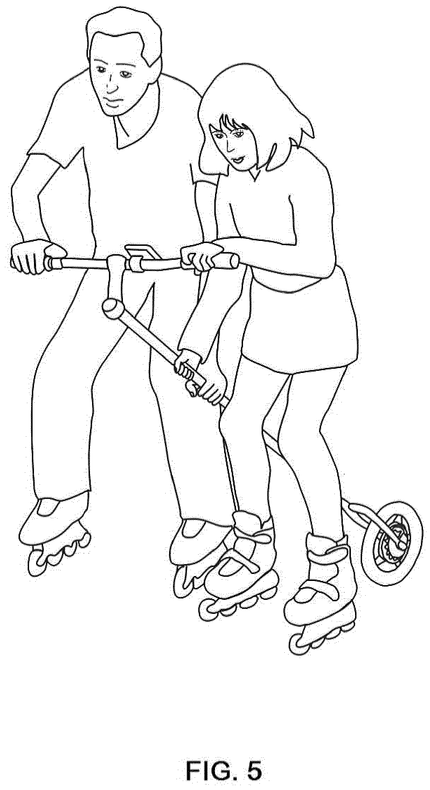

Design of this vehicle provides additional handlebar 2 for passenger (FIG. 2), at the end of which there is a passenger's grip 7. When using the vehicle in sport position by two persons, user and passenger, in roller skates, stand from each side of the vehicle, passenger slightly bending his knees and holding on passenger handlebar and beam of the vehicle (FIG. 5).

Monitor 6 of the vehicle allows user to continuously monitor degree of battery charge. However under conditions of real-life operation, it can happen that battery charge has expired before user arrived at his destination. In such event, user proceeds moving with roller skates on in skating manner, and the vehicle freely rolls towed by user. Integrated in planetary reducer overrunning clutch provides easy overrunning of the wheel. On sheer descents, deenergized vehicle allows user in sport position to safely proceed at hight speed and maintain steady position and also to control the movement speed with use of brake.

The vehicle enables user to travel not only on roller skates but also on skateboard, longboard, pennyboard, roller skis and off-road roller skates.

The vehicle allows user to travel not only on bituminous road pavement but also on terrain and grass ones, at that user shall use roller skis with rolls of adequate size (e.g. trailskate, roll dia of not less than 150 mm) or off-road roller skates.

The vehicle shall be fitted with additional appliances:
mechanical or electronic (electric) alarm. Electronic alarm shall be activated by pressing the respective button and allows user to warn other road traffic participants of approaching of the vehicle;
stoplight. Stoplight shall be activated by pressing the stop grip and allows user to warn other road traffic participants of braking of the vehicle.
turn indicator light. Turn indicator light shall be activated and deactivated with use of switch and allows user to warn other road traffic participants of manoeuvre to be performed;
headlight. Headlight shall be activated and deactivated with use of switch and allows user to safely use the vehicle in the dark;
parking lights. Parking lights shall be activated and deactivated with use of switch and allow user to safely use the vehicle in the dark;
fender. Fender is located above the wheel and protects from dirt and splashes both user and assemblies of the vehicle;
container for carriage of cargoes. Container for carriage of cargoes is secured on the framework and intended for transport of baggage.
additional wheel. Additional wheel is installed on cantilever aside the driving wheel and provides higher stability. This assembly is expedient for use in cases when it is hard for user to keep the vehicle in working position.
bumper. User can drop the vehicle or try and reach over the too high curbstone. So, it is expedient to install bumper which absorbs impact and protects the vehicle from damages.

Hardware and software support of the vehicle can provide following options:
'Reverse' movement mode. This mode is activated by changeover of the switch in respective position. Upon activation of 'Reverse' mode, the controller provides change in direction of the electric motor rotation. 'Reverse' mode is used for movement in stroller mode when the vehicle in working position rolls with its wheel in front.
'Cruise control' movement mode. This movement mode is activated by pressing the button 'Cruise control'. Upon activation of 'Cruise control' mode, the controller starts automatically maintain constant current angle speed of the electric motor rotation. 'Cruise control' movement mode is deactivated by repeated pressing the button 'Cruise control' or upon changeover of speed handlebar to 'maximal speed' position or 'maximal speed' position;
to indicate time. Hardware and software support of the controller provides the clock function, and the controller can display time value on the monitor in digital or graphical format;
to show timer. Hardware and software support of the controller provides determining the summated duration of activation of the controller for all the operation life of the vehicle and display of this indicator on the monitor in digital format;
to display speed value. Hardware and software support of the controller provides calculation of the vehicle's movement speed and display of this indicator on the monitor in digital format;
to display mileage. Hardware and software support of the controller provides calculation of the vehicle's total mileage for entire operation life and display of this indicator on the monitor in digital format;
to display charge. Hardware and software support of the controller provides determining the extent of charge of the power source and display of this indicator on the monitor in digital or graphic format;
to limit the vehicle's maximal movement speed. Hardware and software support of the controller provides limiting the vehicle's movement maximal speed and setting this value in setup. Controller deactivates the electric motor when the vehicle reaches the maximal speed pre-set in setup.
to indicate the wheel's size. Hardware and software support of the controller provides feature of presetting the vehicle wheel's size in setup. This feature is necessary for the controller to calculate 'Speed' and 'Mileage' parameters values.

As to techniques of configuring the vehicle's drive, the following options are feasible, except for OPTION 1:

### OPTION 2

Drive consists of the electric drive and wheel in form of motor-wheel with the motor electric power supply system. Motor-wheel is fitted with electric motor and planetary reducer. As opposed to OPTION 1, overrunning clutch is not used in planetary reducer. This configuration version of the vehicle is compatible with recuperative braking system. Electric motor power supply system is designed similar to that of OPTION 1, but additionally comprises the components providing operation of the recuperative braking system.

### OPTION 3

Drive consists of the electric drive in form of motor-wheel with the motor electric power supply system. Motor-wheel is fitted with electric motor. A opposed to OPTION 1, the motor-wheel uses planetary reducer and overrunning clutch. This configuration version of the vehicle is compatible with recuperative braking system. Motor electric power supply system is designed similar to OPTION 1, but additionally, it can comprise the components providing operation of recuperative braking system.

### OPTION 4

For a drive, the electric drive in form of electric motor, reducer and electric power supply system are used secured on the framework. This configuration version of the vehicle is compatible with recuperative braking system. Motor electric power supply system is designed similar to OPTION 1, but additionally, it can comprise the components providing operation of recuperative braking system.

### OPTION 5

For a drive, the internal combustion engine and reducer are used secured on the framework.

As to techniques of configuring the vehicle's framework, the following options are feasible:

### OPTION A

The framework comprises one beam, and at one end the beam is fitted with a fork with a wheel secured therein; another end of the beam is fitted with left-hand and right-hand grips of different length. On the vehicle with two grips, one grip is intended for user and another for passenger. User shall keep the wheel in a vertical position and, for creation of torque, it is in some cases expedient to make his handle longer. Both grips, beam and fork are rigidly interlinked.
OPTION 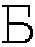

The framework comprises one beam. One end of the beam is fitted with a fork with a wheel secured therein. Another end of the beam is bent and parallel to the wheel rotation axle and serves as a grip, at that the grip as an individual component of the framework's structure is absent. In such configuration of the framework, towing of passenger is not envisaged.

### OPTION B

It should be clarified that, in the event of use of a straight beam, at the vehicle's sport position the wheel is behind and aside of user; as a result, while operation, at abrupt surge of the engine's power there arises a torque relative to a vertical which streams to change the movement direction and hampers user. For reducing this parasitic torque, the beam should be bent so that the wheel would be behind user. In this version, framework comprises one beam; and, at one end of the beam, the fork is fitted in which the wheel is secured; and its another end the beam is fitted with left-hand and right-hand grips; at that, the beam has bends allowing to place the fork with the wheel behind user keeping the wheel's rim in a plane parallel to the movement direction line.

### OPTION Γ

The framework comprises one beam, and at one end the beam is fitted with a fork with a wheel secured therein; another end of the beam is fitted with left-hand and right-hand collapsible grips. The option to collapse the grips allows to decrease the vehicle's size during its transport.
OPTION 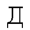

The framework comprises one beam, and the beam can be collapsed. The option to collapse the beam allows to decrease the vehicle's size during its transport.

### OPTION E

The framework comprises not less than one beam, and the one beam is fabricated from a pipe rod the inner space of which is used for laying the electric cables. This version of the framework allows to reduce probability of damages to cable network of the vehicle in emergencies.
OPTION 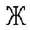

The framework carries assemblies for securing the detachable container for transporting of cargoes.

### OPTION 3

The framework comprises one beam. One end of the beam is fitted with a fork with a wheel secured therein. Another end of the beam is fitted with overhang positioned in the plane parallel to the wheel's rotation plane, rudder is secured in the overhang. Rudder, overhang, beam and fork are rigidly interlinked.

### OPTION M

The framework comprises one beam. One end of the beam is fitted with a fork with a wheel secured therein. Another end of the beam is fitted with a stem secured and oriented in the plane parallel to the wheel's rotation plane. The overhang is fitted with asymmetrical rudder secured therein, right-hand grip of which is oriented parallel to the wheel's rotation plane; and left-hand grip has a bend which allows the end of the left-hand grip to be oriented perpendicular to the wheel's rotation plane, at that the end of the left-hand grip, in working position, is oriented vertically. Rudder, overhang, beam and fork are rigidly interlinked.

### OPTION K

The framework comprises one beam. At one end, the beam is fitted with a fork with a wheel secured therein. The second end of the beam is fitted with a rudder. The central part of the beam is fitted with a supporting handlebar so that the central line of the supporting handlebar is parallel to the wheel rotation plane. The supporting handlebar diverges from the beam at an angle, owing to this, in working position, the supporting handlebar is oriented horizontally. Rudder, beam, supporting handlebar and fork are rigidly interlinked. Supporting handlebar is used when the vehicle is exploited in sport position or for hand carriage of the vehicle. In sport position, user holds with right hand on the speed grip, with left hand he holds on the supporting handlebar; and when he transfers his centre of gravity and exerts pressure on the vehicle through the supporting handlebar, his hand does not tend to slip through down as the orientation of the supporting handlebar is horizontal.
OPTION 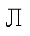

The framework comprises one beam with a wheel secured therein at one end; another end of the beam is fitted with a rudder; and the beam has several bends in the plane parallel to the wheel rotation plane, at that, in the middle part of the beam, there is a linear span at which the supporting handlebar is secured, and the bends of the beam are made so that in working position the supporting handlebar is oriented horizontally. Rudder, beam, supporting handlebar and fork are rigidly interlinked. Supporting handlebar is used when the vehicle is exploited in sport position or for hand carriage of the vehicle. In sport position, user holds with right hand on the speed grip, with left hand he holds on the supporting handlebar; and when he transfers his centre of gravity and exerts pressure on the vehicle through the supporting handlebar, his hand does not tend to slip through down as the orientation of the supporting handlebar is horizontal.

The vehicle with an electric drive as per techniques of charging and recharging can be configured in several options:

### OPTION I

The vehicle has electric drive comprising. Electric drive, for an electric power source, exploits batteries or supercapacitors, and the power sources are non-detachable. For charging the power sources, the vehicle shall be connected, through a special plug connector, to charging device.

### OPTION II

The vehicle has electric drive comprising. For power source, electric drive exploits detachable battery. For charging, the battery shall be detached from the vehicle and connected to charging device.

### OPTION III

The vehicle has electric drive comprising, among others, the recuperative braking system. Recuperative braking system provides, during braking, conversion of mechanical energy of the vehicle and user into electric energy. Generated, as a result of braking, electric energy charges the battery. Recuperative braking system is based on the property of reversibility of electric machines. During recuperative braking, electric motor operates in generator mode creating the required moment of resistance and thus providing braking of rotor part. Electric energy is generated by motor-generator either on account of potential energy of the vehicle during its movement on descent or on account of kinetic energy while the vehicle's slowing down. This configuration version of the vehicle is compatible with the drive options: OPTION 2, OPTION 3 and OPTION 4.

### OPTION IV

The vehicle has electric drive which comprises, among other, solar cell, charge controller and electric power source. On account of solar energy, the solar cell charges or recharges the electric power source. This configuration version of the vehicle is compatible with the drive options: OPTION 1, OPTION 2, OPTION 3 and OPTION 4.

As per configuration of braking system, the vehicle can be configured in several options:

### OPTION a

The vehicle's braking system provides brake lever pressing of which by user initiates braking. Brake lever can be positioned on the vehicle at several places. Probably the optimal place would be the middle part of the beam. In such a case, for a right-hander, when the vehicle is used in sport mode, the right-hand handlebar is fitted with a speed grip, and user holds on it with his right hand, and his left hand grips the beam in its central part; and in this very area the brake lever is being fitted, at that, user can, while keeping the beam in his left hand, grip with his fingers the brake lever and implement braking. At such option of arrangement of the brake lever, different control functions are distributed between the user's hands: right hand is responsible for controlling the motor's power, left hand - for braking.

### OPTION b

The vehicle's braking system provides brake lever pressing of which by user initiates braking. As opposed to OPTION a the brake lever is fitted on the supporting handlebar. In such a case, for a right-hander, when the vehicle is used in sport mode, the right-hand handlebar is fitted with a speed grip, and user holds on it with his right hand, and his left hand grips the supporting handlebar where the brake lever is also being fitted; at that, user can, while keeping the supporting handlebar in his left hand, grip with his fingers the brake lever and implement braking. At such an arrangement of braking lever, similar to OPTION a, different control functions are distributed between user's hands: right hand is responsible for controlling the motor's power, left hand - for braking.

### OPTION c

The vehicle's braking system provides two brake levers, pressing of each of them by user initiates braking. One of the brake levers is fitted in the middle part of the beam on the supporting handlebar, another is fitted on the left handlebar. While operation of the vehicle in sport position, user effects braking with the brake lever fitted in the middle part of the beam. While use of the vehicle in stroller position, the wheel is in front of user; user holds the speed grip with left hand, and with right hand he holds on the 'left grip' which is now on the right from him. In stroller position, user brakes with use of brake lever which is installed on the 'left handlebar'.

### OPTION d

The vehicle's braking system provides brake lever pressing of which by user initiates braking. As opposed to OPTION a, arrangement of the brake lever is classical as on scooters and motor-bikes - the brake lever is installed above the speed grip.

### OPTION e

Rim brakes are used on the vehicle as a part of braking system. Rim brakes operate on account of pressing of the pads to the wheel's rim. Pads are being secured on brake levers which, in turn, are secured moveably on the framework. Upon pressing the brake lever, the brake wire cable is being tightened and the movement of the brake wire cable is transmitted to the pads, and the pads get in contact with the wheel's rim.

### OPTION f

Disc brakes are used on the vehicle as a part of braking system. Disc brakes operate on the account of pressing the pads to the brake disc which is secured on the wheel's bushing. The pads are located inside the braking machine which is secured on the fork. Upon pressing the brake lever, the brake wire cable is being tightened and the movement of the brake wire cable is transmitted to the braking machine which brings in action the pads, and the pads get in contact with the braking disc.

Technical result of the invention is as follows:
- rise in speed of travel of person on roller skates, skateboard, longboard, roller skis or off-road roller skates owing to use of drive;
- rise in stability while travelling on road solid pavement with imperfections at places (cracks, indents, seams of paving tiles etc.) on account of optimal mutual position of feet supports and vehicle support;
- rise in cross-country ability, in particular a user with roller skates on can negotiate road curbstones;
- rise in cruising range on account of decreasing the vehicle's mass.

The invention allows to simplify the design, make the travelling process safer, increase the cruising range and travel speed.

All the basic assemblies of the vehicle being offered are of mass production, thus the mass production of the vehicle is easy to be arranged.

## Claims

1. The declared vehicle, which comprises a frame, a wheel with the option of rotation relative to the frame, a drive and a braking system, differs in that its framework in fabricated in form of at least one beam with the wheel fitted at one its end and the place for embracing by user with his one hand at its another end; whereas the middle part of the beam is intended for support of the user's another hand.

2. The vehicle according to claim 1, differing in that it is manufactured with a grip at the second end of the beam oriented in parallel with the wheel's pivot.

3. The vehicle according to claim 2, differing in that it is manufactured with additional grip at the second end of the beam positioned opposite the first grip and parallel to the wheel's pivot.

4. The vehicle according to claim 1 differing in that it is manufactured with a stem secured at the second end of the beam and positioned in the plane parallel to the wheel's rotation plane with a T-shape rudder secured therein.

5. The vehicle according to claim 1 differs in that it is manufactured with a secured, at the second end of the beam, stem with an asymmetrical rudder secured therein; the right-hand grip of the rudder is positioned in parallel with the wheel's pivot and the left-hand grip has a bend allowing the end of the left-hand grip to be positioned perpendicular to the wheel's pivot, while the end of the left-hand grip in working condition is oriented vertically.

6. The vehicle according to claim 1, or claim 2, or claim 3, or claim 4 differs in that, in the middle part of the beam, the support handle is secured so that centre line of the supporting handlebar is parallel to the wheel rotation plane; at that, the supporting handlebar diverges from the beam at an angle in such a way that in working position the supporting handlebar is oriented horizontally.

7. The vehicle according to claim 1 differs in that the beam has several bends in the plane parallel to the wheel rotation plane; at that, in the middle part of the beam, there is a linear span at which the supporting handlebar is secured, and the bends of the beam are made so that in working position the supporting handlebar is oriented horizontally.

8. The vehicle according to claims 1-7 differs in that the drive comprises an electric motor integrated in the wheel.

9. The vehicle according to claim 8, differing in the following: the drive is supplemented with the reducer which is integrated in the wheel.

10. The vehicle according to claim 9 differs in that the reducer exploits a planetary gear transmission.

11. The vehicle according to claim 1, differing in the following: transmittion of torque to the wheel's rim is implemented through the overrunning clutch.

12. The vehicle according to claim 8 differs in that the electric motor power supply system comprises a speed grip.

13. The vehicle according to claims 1-6 or claims 9-12 differs in that at least one additional side wheel is fitted thereon.

14. The vehicle according to claim 8 differs in that the electric motor power supply system comprises at least one battery.

15. The vehicle according to claim 8 or claim 14 differs in that the electric motor power supply system comprises at least one detachable battery.

16. The vehicle according to claim 8 differs in that the electric motor power supply system comprises at least one supercapacitor.

17. The vehicle according to claim 8 differs in that the electric motor power supply system comprises fuel cells.

18. The vehicle according to claim 8, differing in the following: electric motor power supply system comprises a controller for controlling the electric power being fed to the electric motor.

19. The vehicle according to claim 8 differs in that the electric motor power supply system comprises a solar cell and a electric power source charge controller.

20. The vehicle according to claim 14 or claim 16 differs in that it is additionally fitted with a recuperative braking system.

21. The vehicle according to claims 1-6 differs in that the drive consists of a internal-combustion engine and a reducer, both secured on the framework.

22. The vehicle according to claim 1, differing in that the beam manufactured with a fork at the end, the wheel is secured in the fork and another end of the beam is bent and parallel to the wheel's pivot and serves as a grip.

23. The vehicle according to claim 11, differing in the following: the beam has bends which provide the following by the framework of the user's body shape and allow the wheel to find itself behind the user in the plane parallel to the line of movement direction.

24. The vehicle according to claim 3 differs in that handles are collapsible.

25. The vehicle according to claim 1 differ in that the beam is collapsible.

26. The vehicle according to claim 8 differs in that the beam is fabricated from a pipe rod the inner volume of which is intended for laying the electric cables.

27. The vehicle according to claim 1 differs in that its brake system comprises a brake lever.

28. The vehicle according to claim 1 differs in that its brake system exploits rim brakes.

29. The vehicle according to claim 1 differs in that its brake system exploits disc brakes.

30. The vehicle according to claim 1 differs in that it has mechanical or electronic bicycle bell.

31. The vehicle according to claim 27 differs in that it has a stop signal being activated by pressing the brake lever.

32. The vehicle according to claim 1 differs in that it has a turn light.

33. The vehicle according to claim 1 differs in that it has a headlight.

34. The vehicle according to claim 1 differs in that it has parking lights.

35. The vehicle according to claim 1 differs in that it has a fender fitted above the wheel.

36. The vehicle according to claim 1 differs in that a detachable container for transport of cargoes is secured on the framework.

37. The vehicle according to claim 1, differing in the following: the controller hardware and software support provides the mode of 'Reverse' movement, and this mode of movement is being activated with a switch.

38. The vehicle according to claim 18 differs in that the controller hardware and software support provides the 'Cruise Control' mode.

39. The vehicle according to claim 18 differs in that the controller hardware and software support provides the clock function, and the controller can display time value on the monitor in numeric or graphical format.

40. The vehicle according to claim 18 differs in that the controller hardware and software support provides the function of determining the runtime of the controller, and the controller can display this value on the monitor in numeric format.

41. The vehicle according to claim 18 differs in that the controller hardware and software support provides option for calculation of the vehicle's travel speed and display of this indicator on the monitor in numeric format.

42. The vehicle according to claim 18 differs in that the controller hardware and software support provides option for calculation of the vehicle's total travelled distance and display of this indicator on the monitor in numeric format.

43. The vehicle according to claim 18 differs in that the controller hardware and software support provides option for determining the battery or supercapacitor depth of charge and display of this parameter on the monitor in numeric or graphic format.

44. The vehicle according to claim 18 differs in that the controller hardware and software support provides option for limiting the vehicle's maximal travel speed and presetting this value in settings.

45. The vehicle according to claim 18 differs in that the controller hardware and software support provides option for presetting the vehicle's wheel size and storing this value in settings.

46. The vehicle differs in that it has a bumper intended for protection of the vehicle from mechanical damages.
